# EUROPÄISCHE PATENTSCHRIFT

(11) **EP 3 577 742 B1**
(45) Veröffentlichungstag und Bekanntmachung des Hinweises auf die Patenterteilung: **19.06.2024**
(21) Anmeldenummer: 18714183.3
(22) Anmeldetag: 16.03.2018
(51) Int. Cl.: H02K 3/22, H02K 3/24, H02K 9/197

(54) **STATOR MIT WICKLUNGSKÜHLUNG FÜR EINE ELEKTRISCHE MASCHINE**
STATOR WITH WINDING COOLING FOR AN ELECTRIC MACHINE
STATOR AVEC REFROIDISSEMENT DES BOBINES POUR UNE MACHINE ÉLECTRIQUE

(30) Priorität: 17.03.2017 DE 102017204472
(43) Veröffentlichungstag der Anmeldung: 11.12.2019
(73) Patentinhaber: Siemens Aktiengesellschaft, 80333 München (DE)
(72) Erfinder: DIEHL, Dirk, 91088 Bubenreuth (DE); KLÖPZIG, Markus, 91320 Ebermannstadt (DE); SCHMIDT, Heinz, 91096 Möhrendorf (DE); SCHRÖTER, Andreas, 91336 Heroldsbach (DE); SPAGNOLO, Aristide, 91052 Erlangen (DE); WILKE, Markus, 91054 Erlangen (DE)
(74) Vertreter: Siemens Patent Attorneys
(86) Internationale Anmeldenummer: PCT/EP2018/056728
(87) Internationale Veröffentlichungsnummer: WO 2018/167294

(56) Entgegenhaltungen:
- EP-A2- 0 543 280
- EP-A2- 1 215 800
- DE-A1- 1 913 219
- DE-A1- 10 044 938
- US-A- 1 448 700
- US-A- 4 375 823
- US-A1- 2007 200 441
- US-A1- 2016 211 721

## Beschreibung

Die vorliegende Erfindung betrifft einen Stator für eine elektrische Maschine mit einer zentralen Achse, umfassend eine Statorwicklung sowie ein Statorjoch mit einer Mehrzahl von Nuten. Die Statorwicklung weist eine Mehrzahl von miteinander verbundenen Leitersegmenten auf mit jeweils einem axial innenliegenden Innenabschnitt und zwei axial außenliegenden Außenabschnitten, wobei die Innenabschnitte in die Nuten des Statorjochs eingebettet sind. Weiterhin betrifft die Erfindung eine elektrische Maschine mit einem derartigen Stator.

Bei bekannten Statoren für elektrische Maschinen, insbesondere bei solchen mit hohen Leistungsdichten, müssen Maßnahmen getroffen werden, um die in den Statorwicklungen freigesetzte Verlustwärme effektiv abzuführen und so eine Überhitzung der Wicklungen zu vermeiden. Ein großer Teil der Verlustwärme wird hierbei als Joulesche Wärme durch den Stromfluss in den Leitersegmenten der Statorwicklung erzeugt. Um diese Stromwärmeverluste der Statorwicklungen abzuführen, werden die Statorwicklungen nach dem Stand der Technik zumeist indirekt an ein Kühlungssystem gekoppelt. Mit anderen Worten erfolgt die Kühlung der Wicklung dadurch, dass die Wicklung durch andere Elemente des Stators, insbesondere das Statorjoch und/oder eine Leiterisolierung und/oder eine Gehäusewand der Maschine indirekt an ein Kühlmittel angekoppelt ist. Bei dem Kühlmittel kann es sich beispielsweise um Kühlwasser oder um ein Kühlöl handeln. Beispielsweise sind Maschinen bekannt, bei denen in das Maschinengehäuse Kühlkanäle für eine sogenannte Wassermantelkühlung eingearbeitet sind. Alternativ können im Maschinengehäuse auch Kühlrippen für eine Luftkühlung vorgesehen sein. Ein grundlegender Nachteil der indirekten Wärmeabfuhr ist, dass durch die indirekte thermische Kopplung zwischen Statorwicklung und Kühlmittel ein relativ hoher Temperaturgradient zwischen den einzelnen Komponenten vorliegt und dass entsprechend die Wicklungstemperatur trotz der Kühlung vergleichsweise hoch ist.

Die Dokumente DE 191 3219 und EP 0 543 280 A2 offenbaren einen Stator einer elektrischen Maschine, wobei der Stator einen Fluidkühlkreislauf umfasst.

Zusätzlich zu den beschriebenen Kühlmöglichkeiten über das Maschinengehäuse sind vor allem für sehr leistungsstarke Maschinen weitere Kühlmöglichkeiten bekannt, bei denen die Wärme weiter innen innerhalb der Maschine abgeführt wird. So kann beispielsweise über eine Sprühölkühlung, eine Thermosiphonkühlung und/oder ein Wärmerohr innerhalb der Maschine ein Kühlmittel in noch engerem thermischen Kontakt mit der zu kühlenden Statorwicklung stehen. Auch hier ist jedoch das Kühlmittel typischerweise nicht im direkten Kontakt mit dem elektrischen Leiter, sondern nur indirekt über die Leiterisolierung und/oder das Statorjoch. So ist der vorliegende Temperaturgradient zwar niedriger als bei der indirekten Gehäusekühlung, bei hohen Leistungsdichten besteht jedoch immer noch die Gefahr einer Überhitzung der Wicklung.

Im Unterschied zu den beschriebenen Varianten mit indirekter Wicklungskühlung ist es nach dem Stand der Technik auch bekannt, Leitersegmente der Statorwicklung in direktem Kontakt zu einem Kühlmittel anzuordnen, um sie also direkt entwärmen zu können. Hierzu kann beispielsweise der für die Statorwicklung verwendete Leiter zumindest abschnittsweise als Hohlleiter ausgeführt sein, um Kühlmittel in seinem Inneren führen zu können, wodurch der Leiter ohne zusätzliche thermische Kopplungselemente in direkten Kontakt mit dem Kühlmittel treten kann. Bei einer solchen Lösung wird die Verlustwärme der Wicklung unmittelbar dort abgeführt, wo diese entsteht. Technisch aufwendig ist hierbei jedoch die elektrische und fluidische Ankopplung dieser Hohlleiterspulen, da die einzelnen Wicklungssegmente zum einen durch elektrische Kontakte an einen äußeren Stromkreis angeschlossen werden müssen und da zum anderen die einzelnen Windungen meist getrennt voneinander an Zuflüsse und Abflüsse eines äußeren Kühlmittelkreislaufs angeschlossen werden müssen. Dies muss insbesondere so erfolgen, dass elektrische Kurzschlüsse durch das Kühlmittel zwischen auf unterschiedlichem elektrischem Potenzial befindlichen Windungen vermieden werden. Hierzu ist es meist erforderlich, die einzelnen Windungen getrennt mit Zuleitungen und Ableitungen für das Kühlmittel zu verbinden. Dadurch entsteht ein hoher apparativer Aufwand für das Anschließen der einzelnen Leitungen.

Aufgabe der Erfindung ist es daher, einen Stator mit einer Statorwicklung anzugeben, welcher die genannten Nachteile überwindet. Insbesondere soll ein Stator mit einer Statorwicklung zur Verfügung gestellt werden, welche möglichst effektiv und mit möglichst geringem apparativem Aufwand durch ein Kühlmittel gekühlt werden kann. Eine weitere Aufgabe ist es, eine elektrische Maschine mit einem derartigen Stator anzugeben.

Diese Aufgaben werden durch den in Anspruch 1 beschriebenen Stator und die in Unteranspruch 9 angegebene elektrische Maschine gelöst. Der erfindungsgemäße Stator ist zum Betrieb in einer elektrischen Maschine mit einer zentralen Achse A ausgelegt. Er umfasst eine Statorwicklung und ein Statorjoch mit einer Mehrzahl von Nuten, wobei die Statorwicklung eine Mehrzahl von miteinander verbundenen Leitersegmenten aufweist mit jeweils einem axial innenliegenden Innenabschnitt und zwei axial außenliegenden Außenabschnitten. Dabei sind die Innenabschnitte jeweils in die Nuten des Statorjochs eingebettet. Zumindest in einem Teil der Nuten sind Kanäle zum Durchfluss von Kühlmittel in axialer Richtung gebildet. Der Stator weist zumindest in einem ersten axialen Endbereich eine gegen ihre Umgebung fluidisch gekapselte erste Kühlmittelkammer auf, welche zumindest einen Teil der in diesem ersten axialen Endbereich liegenden Außenabschnitte der Leitersegmente gemeinsam umgibt. Dabei ist die erste Kühlmittelkammer fluidisch mit den Kanälen der Nuten verbunden, um Kühlmittel in diese Kanäle einzuleiten und/oder aus diesen auszuleiten.

Unter den genannten Kanälen der Nuten sollen allgemein offene Bereiche verstanden werden, die zum Durchfluss von Kühlmittel in axialer Richtung geeignet sind. Es müssen also insbesondere keine zusätzlichen Rohrwände vorgesehen sein, die diese Kanäle begrenzen. Es ist beispielsweise ausreichend, wenn diese Kanäle als offene Bereiche zwischen den Leitersegmenten ausgebildet sind, ohne dass zusätzliches Wandmaterial zur Begrenzung der Kanäle in die Nuten eingebracht werden muss. Wesentlich für die vorliegende Erfindung ist nur, dass die Kanäle einen axialen Fluss von Kühlmittel durch die Nuten erlauben, so dass das Kühlmittel in enger räumlicher Nähe zu den Leitersegmenten der Statorwicklung axial fließen kann und die Wicklung so auf effektive Weise entwärmen kann. Erfindungsgemäß steht hierzu das Kühlmittel innerhalb der Nutkanäle sogar in direkten Kontakt mit den Innenabschnitten der Leitersegmente der Statorwicklung. Die thermische Kopplung zwischen Kühlmittel und Statorwicklung kann hier also direkt wirken und musst nicht durch weitere thermisch leitfähige Elemente vermittelt werden. Hierdurch wird erreicht, dass die beim Betrieb des Stators freigesetzte Wärme besonders effektiv bereits am Ort des Entstehens abgeführt wird. So kann eine Überhitzung der Statorwicklung vorteilhaft vermieden werden. Die erfindungsgemäße Art der Statorkühlung ist auch sehr effizient, denn durch die enge thermische Kopplung zwischen Wicklung und Kühlmittel kann eine vorgegebene Kühlwirkung bereits mit einem vergleichsweise geringen Kühlmitteldurchfluss erzielt werden.

Die Kanäle sind allgemein zweckmäßig in radialer Richtung in Richtung des Rotors der elektrischen Maschine hin fluiddicht abgedichtet. Dies bewirkt, dass kein Kühlmittelverlust aus dem Bereich des Stators hin zum Bereich des Rotors stattfindet. Erfindungsgemäß sind die in den Nuten verlaufenden Kanäle radial zu allen Seiten fluiddicht abgedichtet und nur in ihren axial außenliegenden Endbereichen offen, um Kühlmittel einleiten beziehungsweise ausleiten zu können. An dem ersten dieser axialen Endbereiche sind die Nutkanäle fluidisch mit der dort angeordneten ersten Kühlmittelkammer gekoppelt. Mit anderen Worten gehen die Kanalöffnungen an diesem axialen Ende in Zuflüsse und/oder Abflüsse der ersten Kühlmittelkammer über. Erfindungsgemäß sind dies an dem vorgegebenen ersten axialen Endbereich einheitlich nur Zuflüsse aus der ersten Kühlmittelkammer in die Nutkanäle.

Unter der beschriebenen fluidischen Kapselung der ersten Kühlmittelkammer ist zu verstehen, dass diese Kühlmittelkammer zumindest zu radial außenliegenden und radial innenliegenden Bereichen sowie nach axial außen hin fluiddicht abgedichtet ist. Zur axial innenliegenden Seite hin ist die Kühlmittelkammer mit den genannten Nutkanälen fluidisch verbunden. Abgesehen von diesen Anschlüssen ist sie insbesondere auch zu dieser Seite fluidisch abgedichtet. Auch auf den anderen Seiten soll nicht ausgeschlossen sein, dass Zuleitungen oder Ableitungen zur Verbindung mit einem übergeordneten Kühlmittelkreislauf vorliegen. Es soll lediglich durch die Kapselung ein freier Austausch von Kühlmittel mit den umliegenden Umgebungsbereichen unterbunden sein. Durch diese Kapselung wird es insbesondere ermöglicht, im Vergleich zur äu-ßeren Umgebung einen Überdruck oder auch einen Unterdruck auszubilden, um so den Durchfluss von Kühlmittel durch die Kanäle in den Nuten zu fördern. Diese Kanäle können allgemein entweder in axialer Richtung ausgerichtet sein oder sie können schräg angeordnet sein und somit auch eine axiale Richtungskomponente aufweisen. Wesentlich ist nur, dass sie so ausgebildet sind, dass sie einen Kühlmittelfluss mit einer axialen Richtungskomponente ermöglichen. Sie können also beispielsweise entweder als gerade oder als schräg verlaufende Nuten auf einer gemeinsamen Zylindermantelfläche des Stators angeordnet sein.

Die genannte erste Kühlmittelkammer kann sich als eine durchgehende Kammer über den gesamten Umfang des Stators erstrecken. Es kann sich also mit anderen Worten um einen durchgehenden ringförmigen Hohlraum handeln, der jeweils innen und außen durch eine Wand in Form eines Zylindermantels begrenzt ist. Bei dieser Ausführungsform ist es zweckmäßig, wenn diese Kühlmittelkammer alle Außenabschnitte der Leitersegmente umgibt, die im zugeordneten ersten axialen Endbereich des Stators liegen. Mit anderen Worten sind auf dieser Seite dann alle entsprechenden Leitersegmentenden innerhalb derselben Kühlmittelkammer angeordnet. Diese axial außenliegenden Leitersegmentenden werden in der Fachwelt auch als Wickelköpfe bezeichnet. Man kann daher auch sagen, dass für diese Ausführungsform alle Wickelköpfe des ersten axialen Endbereichs des Stators in einer gemeinsamen Wickelkopfkammer angeordnet sind.

Alternativ ist es jedoch auch möglich, dass die erste Kühlmittelkammer ausgehend von einer zylindrischen Grundstruktur in mehrere Teilkammern unterteilt ist, die jeweils Umfangssegmenten des Stators entsprechen. Hierbei ist es insbesondere vorteilhaft, wenn die Anzahl dieser Umfangssegmente der Polpaarzahl der elektrischen Maschine entspricht. Im genannten axialen Endbereich ist die Wickelkopfkammer dann also in mehrere Teilkammern aufgeteilt, wobei jede Teilkammer nur die Wickelköpfe des zugeordneten Umfangssegments enthält.

Wesentliche Vorteile der beschriebenen Ausführung des Stators liegen allgemein darin, dass von der ersten Kühlmittelkammer aus ein Kühlmittelfluss durch die Nutkanäle in axialer Richtung bewirkt werden kann. Dies wird insbesondere dadurch ermöglicht, dass durch eine Kapselung dieser Kühlmittelkammer in dem die Wickelköpfe umgebenden Bereich die Ausbildung eines Druckgradienten über die Länge der Nutkanäle hinweg bewirkt werden kann. Durch einen Überdruck in der ersten Kühlmittelkammer kann also eine Einspeisung von Kühlmittel in die Nutkanäle bewirkt werden. Daher liegt ein allgemeiner Vorteil darin, dass eine Mehrzahl von Nutkanälen im axialen Endbereich an eine gemeinsame Kühlmittelkammer gekoppelt ist und somit die Kühlmittelversorgung der Nutkanäle wesentlich einfacher ist, als wenn diese jeweils mit separaten Kühlmittelanschlüssen versehen werden müssten.

Die erfindungsgemäße elektrische Maschine weist einen erfindungsgemäßen Stator sowie zusätzlich einen Rotor auf. Die Vorteile der erfindungsgemäßen elektrischen Maschine ergeben sich analog zu den oben beschriebenen Vorteilen des erfindungsgemäßen Stators.

Vorteilhafte Ausgestaltungen und Weiterbildungen der Erfindung gehen aus den von dem Anspruch 1 abhängigen Ansprüchen sowie der folgenden Beschreibung hervor. Dabei können die beschriebenen Ausgestaltungen des Stators und der elektrischen Maschine vorteilhaft miteinander kombiniert werden.

So ist bei dem Stator die erste Kühlmittelkammer im ersten axialen Endbereich zur Einspeisung von Kühlmittel in die Kanäle der Nuten ausgebildet, wobei der gegenüberliegende zweite axiale Endbereich des Stators als Kühlmittelaustrittsseite der Kanäle ausgebildet ist. Mit anderen Worten ist bei dieser Ausführungsform der Stator so ausgestaltet, dass alle Nutkanäle das Kühlmittel in dieselbe übergeordnete axiale Richtung transportieren. Dazu müssen die Nutkanäle nicht alle genau parallel liegen, aber sie weisen eine gemeinsame axiale Eintrittsseite und eine gemeinsame axiale Austrittsseite auf. Ein wesentlicher Vorteil dieser Ausführungsform liegt allgemein darin, dass die Förderung von Kühlmittel durch die Mehrzahl von Nutkanälen gemeinsam durch ein übergeordnetes Druckgefälle zwischen den beiden axialen Endbereichen getrieben werden kann. Besonders bevorzugt ist es bei dieser Ausführungsform, wenn im ersten axialen Endbereich, also nur auf der Kühlmitteleintrittsseite, eine gemeinsame Kühlmittelkammer vorliegt und im zweiten axialen Endbereich, also auf der Kühlmittelaustrittsseite, die Nutkanäle offen liegen. Bei dieser Ausführungsform herrscht auf der Austrittsseite somit ungefähr Umgebungsdruck, und die Förderung des Kühlmittels durch die Kanäle kann durch einen Überdruck in der ersten (und hier einzigen) Kühlmittelkammer bewirkt werden. Für dieses Funktionsprinzip ist es dabei unerheblich, ob diese erste Kühlmittelkammer als durchgehende ringförmige Kammer oder als Anordnung aus mehreren segmentierten Teilkammern vorliegt, wie weiter oben beschrieben. Auch wenn die Nutkanäle im zweiten axialen Endbereich offen liegen, kann das Kühlmittel trotzdem einem übergeordneten Kühlmittelkreislauf erneut zugeführt werden. Hierzu ist keine gekapselte Kühlmittelkammer wie im ersten axialen Endbereich nötig, denn das hier austretende Kühlmittel kann auch bei Umgebungsdruck, beispielsweise in einem offenen Sammelbehälter innerhalb des Stators aufgefangen werden und von hier aus dem Kühlmittelkreislauf erneut zugeführt werden.

Erfindungsgemäß ist die Statorwicklung über elektrische Anschlüsse mit einem äußeren Stromkreis verbindbar, wobei diese elektrischen Anschlüsse ausschließlich im zweiten axialen Endbereich der Statorwicklung angeordnet sind. Mit anderen Worten sollen hier die äußeren elektrischen Anschlüsse also nur auf der Kühlmittelaustrittsseite vorgesehen sein. Seit die gegenüberliegende Kühlmitteleintrittsseite im Bereich der ersten Kühlmittelkammer als Hochdruckseite ausgebildet ist, ist diese Art der Kontaktierung besonders vorteilhaft, denn dann müssen auf der Hochdruckseite keine Durchführungen für elektrische Anschlüsse vorgesehen werden. Erfindungsgemäß, das Kühlmittel durch einen Überdruck aus der wenigstens einen ersten Kühlmittelkammer im ersten axialen Endbereich einzuspeisen, ohne dass Durchführungen für die elektrischen Anschlüsse durch diese erste Kühlmittelkammer nötig sind. Somit führt diese Art der Kühlmitteleinspeisung in die Nutkanäle hier nicht zu einer Erhöhung des apparativen Aufwands bei den elektrischen Kontakten.

Allgemein ist es jedoch auch möglich und unter Umständen vorteilhaft, wenn der Stator im zweiten axialen Endbereich, der dem ersten axialen Endbereich gegenüberliegt, eine gegen ihre Umgebung fluidisch gekapselte zweite Kühlmittelkammer aufweist. Diese zweite Kühlmittelkammer kann zumindest einen Teil der in diesem zweiten axialen Endbereich liegenden Außenabschnitte der Leitersegmente umgeben. Mit anderen Worten sind bei dieser Ausführungsform des Stators die Wickelköpfe der Statorwicklung in beiden axialen Endbereichen innerhalb gekapselter Wickelkopfkammern angeordnet. Hier wird also auch auf der Austrittsseite das aus den Nutkanälen austretende Kühlmittel direkt im Bereich der Wickelköpfe innerhalb einer gekapselten Kammer aufgefangen, was die Rückführung von hier in einem übergeordneten geschlossenen Kühlmittelkreislauf erleichtert.

Erfindungsgemäß ist das Statorjoch im ersten axialen Endbereich mit einer Deckplatte verbunden wobei die erste Kühlmittelkammer gegen diese Deckplatte fluiddicht abgedichtet ist und wobei die Deckplatte eine Mehrzahl von Öffnungen aufweist, die die erste Kühlmittelkammer fluidisch mit den Kanälen der Nuten koppeln. Mit anderen Worten ist die erste Kühlmittelkammer auf ihrer axial innenliegenden Seite mit Ausnahme ihrer Öffnungen zu den Nuten beziehungsweise den Nutkanälen durch die Deckplatte fluiddicht abgeschlossen. Dies verhindert ein Austreten von Kühlmittel in Bereiche der Nuten beziehungsweise des Statorjochs, die nicht dem Inneren der Nutkanäle entsprechen. Auf diese Weise wird sichergestellt dass kein Kühlmittel an die Umgebung der Kühlmittelkammer verloren wird. Zur entsprechenden fluiddichten Abdichtung sollen insbesondere eine innere zylindermantelförmige Begrenzungswand sowie eine äußere zylindermantelförmige Begrenzungswand gegen die genannte Deckplatte abgedichtet sein. Um eine solche Abdichtung zu ermöglichen, ist die Deckplatte insbesondere so ausgestaltet, dass sie auch im Bereich der Nuten einen geschlossenen umlaufenden Rand aufweist. Insgesamt kann diese Deckplatte eine ähnliche Grundform wie das Statorjoch aufweisen. Insbesondere kann das Statorjoch aus einzelnen gestapelten Blechen zusammengesetzt sein, also als Statorblechpaket ausgestaltet sein, wobei die Deckplatte in ihrer Form diesen Blechen weitgehend ähneln kann. Auch die Deckplatte weist zweckmäßig Öffnungen im Bereich der Nuten auf, um Durchführungen von der ersten Kühlmittelkammer in die jeweiligen Nutkanäle zu ermöglichen. Die Nutschlitze sind jedoch vorteilhaft geschlossen, um eine fluiddichte Abdichtung der Außenwand der Kühlmittelkammer gegen die Deckplatte zu ermöglichen.

Die Statorwicklung ist vorteilhaft zumindest im Bereich der Innenabschnitte mit einem Imprägniermittel versehen, welches die Kanäle der Nuten fluidisch gegen die äußere Umgebung abdichtet. Dies ist insbesondere bei solchen Ausführungsformen vorteilhaft, bei denen die Nutkanäle nicht schon von vorneherein durch eine fluiddichte Wand begrenzt sind, also beispielsweise bei Ausführungsformen, bei denen die Nutkanäle durch Aussparungen zwischen den innenliegenden Leitersegmenten der Statorwicklung gebildet werden. Solche Aussparungen können beispielsweise durch Platzhalter innerhalb der Nuten geschaffen werden, die nach der Anordnung der Leitersegmente entfernt werden und so einen Hohlraum schaffen. Je nach mechanischer Stabilität der Leitersegmente kann dieses Entfernen entweder vor oder nach dem Aufbringen der Imprägnierung erfolgen. Bei einer alternativen Ausführungsform können solche Aussparungen auch durch die Form der Leitersegmente selbst erzeugt werden. Beispielsweise können mehrere Leitersegmente mit U-förmigem Querschnitt übereinander gestapelt werden. Auch hier ergibt sich innerhalb der einzelnen "U"s jeweils ein Hohlraum, der in axialer Richtung von Kühlmittel durchflossen werden kann. Unabhängig von der genauen Ausbildung solcher Aussparungen können diese fluiddicht gegen ihre Umgebung abgeschlossen werden, indem ein Imprägniermittel in die Wicklung eingebracht wird, welches jedoch die Hohlräume nicht befüllt, sondern nur nach außen hin zusätzlich abdichtet. Dies kann beispielsweise dadurch erreicht werden, dass der Kapillareffekt genutzt wird, um Imprägniermittel nur in die engeren Zwischenräume zwischen den Leitersegmenten eintreten zu lassen und nicht in die Kanäle selbst. Auch kann die Statorwicklung beim Aufbringen des Imprägniermittels in einem oder beiden axialen Endbereichen von Imprägniermittel freigehalten werden, sodass das Imprägniermittel nicht von hier aus in die Nutkanäle gelangen kann. Dies kann beispielsweise durch einseitiges Eintauchen oder durch lokales Aufbringen von Imprägniermittel im axial innenliegenden Bereich erfolgen. Allgemein und unabhängig von der Ausgestaltung der Kanäle und der Auftragung des Imprägniermittels ist es vorteilhaft, dass das Imprägniermittel insbesondere so ausgebildet ist, dass es eine Abdichtung der Nutkanäle gegenüber einem Luftspalt der Maschine bewirkt. So kann ein Austreten von Kühlmittel in den Bereich des Rotors der elektrischen Maschine wirksam vermieden werden.

Alternativ oder zusätzlich zu der beschriebenen Imprägnierung der Statorwicklung kann in wenigstens einem axialen Endbereich des Stators eine Vergussmasse aufgebracht sein, welche die aus der ersten Kühlmittelkammer in die Bereiche der Nuten geführten Leitersegmente gegen eine axial innenliegende Begrenzungswand der Kühlmittelkammer abdichtet. Eine solche axial innenliegende Begrenzungswand der Kühlmittelkammer kann beispielsweise die oben genannte Deckplatte sein. Die Leitersegmente der Statorwicklung erstrecken sich allgemein von einem Bereich innerhalb der Nuten in den axial weiter außen liegenden Bereich innerhalb der Kühlmittelkammer. Die Kanäle müssen einerseits zur Kühlmittelkammer hin offen sein, um einen Austausch von Kühlmittel zu ermöglichen. Andererseits sollten die Kanalwände auch im Bereich dieser Öffnungen gegen die übrige äußere Umgebung abgedichtet sein. Dies kann vorteilhaft durch die beschriebene Vergussmasse erreicht werden. Wenn die Kanäle der Nuten durch Rohre definiert sind, können sich diese Rohre vorteilhaft in den Bereich der ersten Kühlmittelkammer erstrecken. In diesem Fall kann die genannte Vergussmasse die Rohre im Bereich des Durchtritts gegen die innere axiale Begrenzungswand der Kühlmittelkammer abdichten. Bei den genannten Rohren kann es sich insbesondere um die Leitersegmente selbst handeln, die zumindest in diesem Bereich rohrförmig ausgebildet sein können.

Die Statorwicklung kann vorteilhaft durch elektrisches Verbinden einer Vielzahl vorgefertigter haarnadelförmiger Leiterelemente gebildet sein. Hierbei kann jedes dieser haarnadelförmigen Leiterelemente zwei axial innenliegende Innenabschnitte aufweisen, welche durch einen U-förmig gebogenen axial außen liegenden Abschnitt miteinander zu einem insgesamt haarnadelförmigen Leiterelement verbunden sind. Zur Bildung der Statorwicklung kann eine Vielzahl solcher haarnadelförmiger Leiterelemente an ihren offenen Enden elektrisch so miteinander verbunden werden, dass eine übergeordnete Wicklung entsteht. Die Anzahl haarnadelförmiger Leiterelemente entspricht dabei der Anzahl der Windungen, wobei die Anzahl der in Anspruch 1 genannten Leitersegmente im Vergleich dazu doppelt so hoch ist, da jede Windung zwei Innenabschnitte aufweist. Ein wesentlicher Vorteil der beschriebenen Ausführungsform mit haarnadelförmigen Leiterelementen ist, dass diese leicht vorab gefertigt werden können und dass eine Vielzahl gleich aufgebauter Teile zum Aufbau der Wicklung nachträglich zusammengeführt werden können. Jedes haarnadelförmige Leiterelement kann dabei mechanisch stabil vorgeformt werden und muss beim Zusammensetzen zu einer übergeordneten Statorwicklung nicht mehr wesentlich verformt werden (abgesehen von einem möglichen Biegen am offenen Ende der Haarnadel) .

Bei einer derartigen Ausführungsform mit haarnadelförmigen Leiterelementen ist es allgemein vorteilhaft, wenn der offene Teil der Haarnadel im ersten axialen Endbereich und somit in der ersten Kühlmittelkammer angeordnet ist. Dies kann insbesondere die Kühlmitteleinlassseite sein. Dies ist vor allem bei einer Ausführungsform mit aus Hohlleitern gebildeten Haarnadeln vorteilhaft, denn dann kann das hohle offene Ende der Haarnadel zur Einspeisung von Kühlmittel aus der ersten Kühlmittelkammer in den Innenraum der Leiterelemente verwendet werden. Der Auslass des Kühlmittels kann dann im gegenüberliegenden zweiten axialen Endbereich beispielsweise durch wenigstens eine Bohrung oder anderweitige Ausnehmung im gebogenen Bereich des haarnadelförmigen Leiters erfolgen.

Alternativ zu der vorab beschriebenen Ausführungsform kann die Statorwicklung durch elektrisches Verbinden einer Vielzahl vorgefertigter stangenförmiger und/oder L-förmiger Leiterelemente gebildet sein. Im Gegensatz zum vorherigen Beispiel mit haarnadelförmigen Leiterelementen bildet hier jedes Leiterelement nur einen axial innenliegenden Innenabschnitt eines Leitersegments aus. Ähnlich zu den Ausführungsformen mit haarnadelförmigen Leiterelementen liegt auch hier ein wesentlicher Vorteil in der Möglichkeit, eine Vielzahl gleichartiger vorgefertigter Leiterelemente nachträglich zu einer übergeordneten Statorwicklung zu verbinden, ohne die Leiterelemente dabei wesentlich in ihrer Form verändern zu müssen.

Erfindungsgemäß werden die genannten Leiterelemente als Hohlleiter auszuführen, sodass die Leiterinnenräume im Inneren der Nuten die Nutkanäle ausbilden können.

Bei einer nicht beanspruchten Ausführungsform sind die Kanäle der Nuten durch sich in axialer Richtung erstreckende Zwischenräume zwischen den Innenabschnitten der Leitersegmente gebildet. Mit anderen Worten bilden die Leitersegmente selbst zumindest teilweise die Begrenzungswände der Nutkanäle aus, wobei die Nutkanäle jedoch nicht vollständig innerhalb der einzelnen Leiter (wie beim Hohlleiter), sondern zwischen den Leitern geführt werden. Dies kann beispielsweise durch die beschriebene Stapelung mehrerer U-förmiger Leiter erreicht werden. Eine andere Möglichkeit, Zwischenräume zwischen den Innenabschnitten der Leitersegmente auszubilden, ist es, wie weiter oben beschrieben Abstandshalter in die Statorwicklung einzubringen und diese nach dem Herstellen der Wicklung zu entfernen, wodurch Hohlräume für den axialen Durchtritt von Kühlmittel gebildet werden, welche ebenfalls neben den Leitersegmenten verlaufen.

Bei einer nicht beanspruchten Ausführungsform können die Kanäle der Nuten auch durch zusätzlich in die Nuten eingebrachte Kühlmittelrohre gebildet sein. Solche Rohre können entweder neben den Innenabschnitten der Leitersegmente geführt sein oder aber die Innenabschnitte der Leitersegmente können besonders vorteilhaft innerhalb solcher Rohre geführt sein.

Ein besonderer Vorteil der letztgenannten Variante ist es, dass hier das Kühlmittel in direkten Kontakt mit den Innenabschnitten der Leitersegmente treten kann und dass trotzdem eine fluiddichte Ausgestaltung der Nutkanäle gegeben ist, bei gleichzeitig leichter Herstellbarkeit.

Erfindungsgemäß sind zumindest für eine erste Teilmenge der Leitersegmente die Innenabschnitte dieser Leitersegmente als Hohlleiter ausgebildet, sodass die Kanäle der Nuten durch die Innenräume der Leiter selbst gebildet werden. Auch hier sind die oben beschriebenen Vorteile gegeben, nämlich ein direkter Kontakt des Kühlmittels mit den Leitersegmenten, eine fluiddichten Ausgestaltung der Nutkanäle sowie eine leichte Herstellbarkeit dieser Kanäle. Ein weiterer Vorteil ist dadurch gegeben, dass durch die gleichzeitige Nutzung des Leiters als Kanalwand die Einbringung von zusätzlichem Material in die Nuten des Statorjochs vermieden werden kann. Auf diese Weise kann eine verbesserte Raumausnutzung des Nutquerschnitts erreicht werden. Weiterhin ist durch die Ausbildung als Hohlleiter die Geometrie der Kanäle gut definiert und ein optional in die Statorwicklung eingebrachtes Imprägniermittel kann nicht in die Innenräume dieser Nutkanäle gelangen, wenn die axialen Endbereiche vor Imprägniermittel geschützt werden. Bei der Verwendung von haarnadelförmigen, L-förmigen und/oder stangenförmigen Leitersegmenten können diese vorgefertigten Segmente wie oben beschrieben besonders vorteilhaft als Hohlleiter ausgebildet sein.

Bei der beschriebenen Ausführungsform mit Hohlleitern ist es nicht notwendig, dass alle Leitersegmente innerhalb der Nuten als Hohlleiter ausgeführt sind. Es kann auch besonders vorteilhaft sein, dass für eine zweite Teilmenge der Leitersegmente die Innenabschnitte als massive Leiter ausgebildet sind. Mit anderen Worten können also Hohlleiter und massive Leiter innerhalb der Statorwicklung nebeneinander vorliegen. Insbesondere können Hohlleiter und massive Leiter nebeneinander innerhalb derselben Nut vorliegen. Auch hiermit kann eine besonders gute Ausnutzung des vorhandenen Nutquerschnitts erreicht werden, wobei der Anteil an verwendetem Hohlleitermaterial an den benötigten Kühlmitteldurchfluss angepasst werden kann, um die gewünschte Kühlwirkung innerhalb der Wicklung zu erzielen.

Bei der erfinderischen Ausführungsform mit Hohlleitern können insbesondere die als Hohlleiter ausgeführten Abschnitte der Leitersegmente durch massiv ausgeführte Leiterabschnitte elektrisch miteinander verbunden sein. Eine solche massive Leiterverbindung kann beispielsweise nur in einem axialen Endbereich oder auch in beiden axialen Endbereichen vorgesehen sein. So können beispielsweise mehrere hohle haarnadelförmige Leiterelemente an ihren offenen Enden jeweils durch massive Leiterabschnitte in einem gemeinsamen axialen Endbereich miteinander verbunden sein. Dies kann zweckmäßig der Endbereich sein, an dem Kühlmittel in die offenen Enden des Hohlleiters eingespeist wird. Aber auch bei stangenförmigen oder L-förmigen Hohlleitern ist die Verbindung mittels massiver Leiterelemente möglich und vorteilhaft. Allgemein wird die Nutzung massiver Verbindungselemente dadurch möglich, dass die erste Kühlmittelkammer die Innenräume der einzelnen Hohlräume fluidisch miteinander koppelt und dass die Stromführung durch die übergeordnete Statorwicklung nicht parallel zur Kühlmittelführung durch die Leiterabschnitte erfolgen muss. Insbesondere kann Kühlmittel in derselben axialen Richtung durch die elektrischen Hinleiter und Rückleiter der Statorwicklung fließen. Hierdurch müssen die Leitersegmente in den axialen Endbereichen nicht zum Weitertransport von Kühlmittel in den jeweils elektrischen nachgelagerten Wicklungsabschnitt ausgebildet sein.

Erfindungsgemäß ist zumindest ein Teil der Außenabschnitte der Leitersegmente als Hohlleiter ausgeführt, diese Hohlleiter vorteilhaft im Bereich der Außenabschnitte Öffnungen aufweisen, um Kühlmittel in den Hohlleiter einzuspeisen und/oder aus dem Hohlleiter auszuleiten. Mit anderen Worten können in einem oder sogar in beiden axialen Endbereichen Öffnungen in den Hohlleitern vorgesehen sein, um die Hohlleiter an eine Kühlmittelzuführung und/oder an eine Kühlmittelableitung zu koppeln. Dabei liegt zumindest einer der axialen Seiten eine fluidischen Kopplung mit einer Kühlmittelkammer vor, die mit mehreren solchen Leitersegmenten verbunden ist. Besonders vorteilhaft ist die beschriebene Ausführungsform zum Ausleiten von Kühlmittel aus haarnadelförmigen Hohlleitern auf der Kühlmittelaustrittsseite der Statorwicklung. Hierbei kann es sich um eine offene Seite der Nutkanäle handeln. Mit anderen Worten muss die Kühlmittelaustrittsseite nicht mit einer gemeinsamen Kühlmittelkammer verbunden sein, sondern die Kühlmittelkammer kann wie vorab beschriebenen ausschließlich auf der Eintrittsseite vorliegen.

Die elektrische Maschine kann - unabhängig von ihrer genauen Anwendung und Ausführungsform - allgemein entweder als Motor und/oder als Generator betrieben werden. Sie kann grundsätzlich vorteilhaft als Synchronmaschine ausgebildet sein. Alternativ kann sie aber auch vorteilhaft als Asynchronmaschine ausgebildet sein. Es kann sich allgemein vorteilhaft bei der elektrischen Maschine um eine Innenrotormaschine handeln, bei der also der Stator den Rotor radial umgibt.

Die elektrische Maschine kann vorteilhaft so ausgestaltet sein, dass das verwendete Kühlmittel innerhalb eines geschlossenen Kühlmittelkreislaufs zirkuliert wird. Hierzu kann das Kühlmittel auf der Kühlmittelaustrittsseite des Stators aufgefangen werden und über eine Rückkühleinheit wiederum der Kühlmitteleintrittsseite des Stators zugeführt werden. Optional können dabei innerhalb dieses Kühlmittelkreislaufs auch ein oder mehrere weitere Elemente der elektrischen Maschine durch dasselbe Kühlmittel gekühlt werden.

Bei dem Kühlmittel kann es sich allgemein vorteilhaft um ein elektrisch isolierendes Kühlmittel handeln, beispielsweise ein isolierendes Kühlöl. Alternativ kann es sich aber prinzipiell auch um andere Kühlmittel wie beispielsweise Kühlwasser (insbesondere entionisiertes Kühlwasser) oder auch ein elektrisch leitendes Kühlöl handeln.

Die elektrische Maschine kann allgemein vorteilhaft frei von einem Spaltrohr sein. Mit anderen Worten kann die elektrische Maschine frei von einem zusätzlichen Rohr innerhalb des Luftspalts sein, welches den Innenraum der Nuten des Stators fluidisch vom radialen Bereich des Rotors trennt. Wesentlich ist vor allem, dass der Stator frei von einem solchen zusätzlichen Rohr ist, dass also zwischen den Nutzschlitzen des Stators und den rotierenden Teilen der elektrischen Maschine keine feststehende (nicht rotierende) fluidisch Trennwand vorgesehen ist. Diese Ausführungsform hat den Vorteil, dass der Luftspalt der elektrischen Maschine wesentlich enger ausgeführt werden kann als bei einer Maschine, bei der eine fluidische Trennung durch ein solches feststehendes Spaltrohr erforderlich ist. Bei der erfindungsgemäßen Ausführung des Stators wird die fluidische Kapselung der von Kühlmittel durchströmten Bereiche des Stators stattdessen durch die beschriebene Abdichtung der wenigstens einen Kühlmittelkammer und der Nutkanäle erreicht.

Nachfolgend wird die Erfindung anhand einiger bevorzugter Ausführungsbeispiele unter Bezugnahme auf die angehängten Zeichnungen beschrieben, in denen:
- Figur 1: einen schematischen Längsschnitt einer elektrischen Maschine nach einem ersten Ausführungsbeispiel zeigt,
- Figur 2: einen schematischen Querschnitt einer elektrischen Maschine nach einem weiteren Ausführungsbeispiel zeigt,
- Figur 3: einen schematischen Längsschnitt eines Stators nach einem weiteren Ausführungsbeispiel zeigt,
- Figur 4: einen schematischen Längsschnitt für einen Ausschnitt eines Stators nach einem weiteren Beispiel zeigt,
- Figur 5: eine schematische Außenansicht für einen Teil eines Stators nach einem weiteren Beispiel der Erfindung zeigt,
- Figur 6: ein haarnadelförmiges Leiterelement aus dem Stator der Figur 5 zeigt,
- Figur 7: und Figur 8 weitere alternative Formen von vorgefertigten Leiterelementen zeigen und
- Figur 9: eine schematische perspektivische Ansicht eines Stators nach einem weiteren Beispiel der Erfindung zeigt.

Gleiche oder gleichwirkende Elemente sind in den einzelnen Figuren mit den gleichen Bezugszeichen gekennzeichnet.

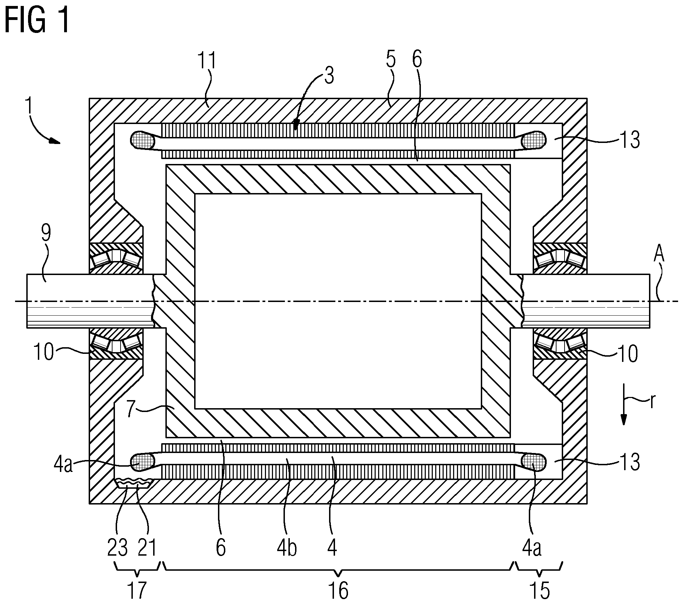

In Figur 1 ist eine elektrische Maschine 1 nach einem ersten Ausführungsbeispiel der Erfindung im schematischen Längsschnitt gezeigt. Die elektrische Maschine 1 umfasst einen Rotor 7 und einen Stator 3. Der Rotor 7 ist mittels einer Rotorwelle 9 um eine Rotationsachse drehbar gelagert, wobei diese Rotationsachse der zentralen Achse A der Maschine und somit auch des Stators 3 entspricht. Hierzu ist die Rotorwelle 9 über die Lager 10 gegen das Maschinengehäuse 11 abgestützt. Bei der elektrischen Maschine kann es sich grundsätzlich um einen Motor oder einen Generator handeln oder auch um eine Maschine, die in beiden Modi betrieben werden kann.

Der Stator 3 weist eine Statorwicklung 4 mit einer Mehrzahl von Leiterwindungen auf, die in Form einer verteilten Wicklung über den Umfang des Stators 3 angeordnet sind. Dabei kann die Statorwicklung 4 auch in mehrere abgeschlossene Umfangssegmente unterteilt sein. Die Statorwicklung 4 ist in Nuten eines Statorblechpakets 5 eingebettet, welches in einem axial innenliegenden Bereich 16 des Stators 3 angeordnet ist und als Statorjoch wirkt. Vor allem die im axial innenliegenden Bereich 16 angeordneten Teile der Statorwicklung 4 treten beim Betrieb der elektrischen Maschine 1 in elektromagnetische Wechselwirkung mit einem Feld des Rotors. Dazu ist der Rotor 7 mit einer hier der Übersichtlichkeit halber nicht dargestellten Felderregung ausgestattet. Diese Wechselwirkung findet über einen Luftspalt 6 hinweg statt, der radial zwischen Rotor 7 und Stator 3 liegt.

Die Statorwicklung 4 weist einen innenliegenden Wicklungsabschnitt 4b auf, in dem die Innenabschnitte der einzelnen Leitersegmente der Statorwicklung 4 angeordnet sind. Axial daran angrenzend finden sich im ersten axialen Endbereich 15 und im zweiten axialen Endbereich 16 Wicklungsköpfe 4a, durch die die in den Nuten des Statorblechpakets 5 liegenden Innenabschnitte in der Art einer verteilten Statorwicklung 4 verbunden sind.

Die Wicklungsköpfe 4a und somit die Außenabschnitte der Statorwicklung 4 sind im Beispiel der Figur 1 im ersten axialen Endbereich 15 innerhalb einer gekapselten ersten Kühlmittelkammer 13 angeordnet. Diese erste Kühlmittelkammer 13 ist so gegen ihre äußere Umgebung gekapselt, dass ein Kühlmittel unter Druck durch eine hier nicht dargestellte Kühlmittelzuflussleitung eingespeist werden kann. Wie im Zusammenhang mit den folgenden Figuren noch näher erläutert wird, kann dieses Kühlmittel von der ersten Kühlmittelkammer 13 aus durch die in den Nuten angeordneten Kanäle in axialer Richtung hin zum zweiten axialen Endbereich 17 transportiert werden und so innerhalb der Nuten den axial innenliegenden Bereich 4b der Statorwicklung 4 auf effiziente Weise kühlen. Die erste Kühlmittelkammer 13 ist also fluidisch mit diesen Kanälen gekoppelt. Im zweiten axialen Endbereich 17 des Stators sind im Beispiel der Figur 1 die Wickelköpfe 4a nicht in eine ähnliche Kühlmittelkammer eingebettet, sondern sie liegen in diesem Endbereich 17 offen. Das hier aus den Nutkanälen austretende Kühlmittel 21 kann in einem Sammelbereich 23 aufgefangen werden und von hier aus durch nicht näher dargestellte Leitungen dem Kühlmittelkreislauf zurückgeführt werden.

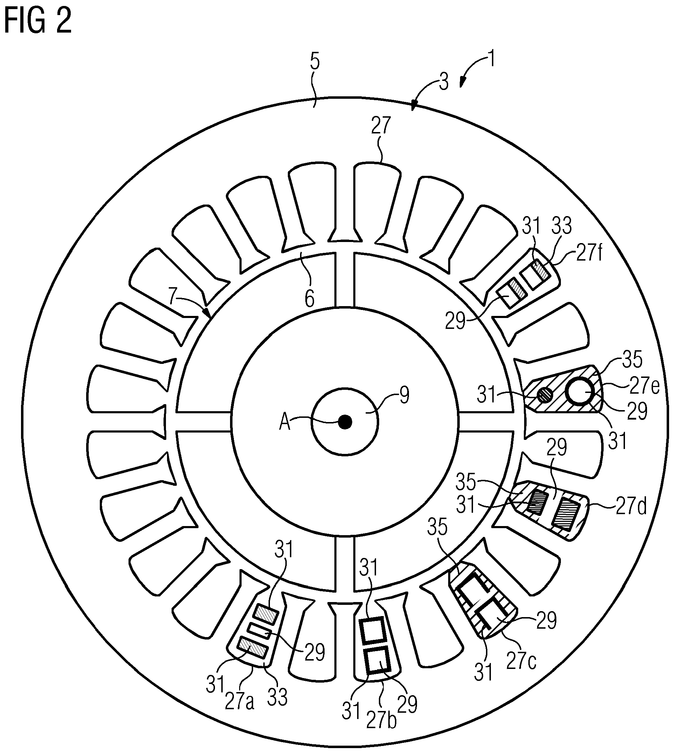

Figur 2 zeigt einen schematischen Querschnitt einer elektrischen Maschine 1 nach einem weiteren Ausführungsbeispiel der Erfindung. Gezeigt ist also ein Querschnitt senkrecht zu der zentralen Achse der elektrischen Maschine 1. Diese Maschine kann grundsätzlich ähnlich wie in Figur 1 dargestellt aufgebaut sein, also mit einer die Wickelköpfe 4a umgebenden ersten Kühlmittelkammer 13 im ersten axialen Endbereich 15 der Maschine. Der in Figur 2 dargestellte Querschnitt ist ein Schnitt durch Stator 3 und Rotor 7 im axial innenliegenden Bereich 16 der Maschine. Das Maschinengehäuse 11 ist hier der Übersichtlichkeit halber nicht dargestellt. Gezeigt ist das Statorblechpaket 5, welches auf der radial innenliegenden Seite des Stators 3 mit einer Mehrzahl von über den Umfang verteilten Nuten 27 versehen ist. In diesen Nuten 27 sind die axial innenliegenden Wicklungsabschnitte 4b der Statorwicklung 4 eingebettet. Weiterhin sind innerhalb der Nuten Kanäle 29 angeordnet, innerhalb derer ein fluides Kühlmittel 21 fließen kann. Die innerhalb der Nuten geführten Innenabschnitte der Leitersegmente sowie die Kanäle können sehr unterschiedlich ausgeführt sein. Daher sind in Figur 2 bei mehrere unterschiedliche Konfigurationen dargestellt:
Bei einer nicht beanspruchten Ausführungsform zeigt die Nut 27a beispielhaft zwei Leitersegmente 31, in deren Zwischenraum ein separates Rohr 33 mit rechteckigem Querschnitt angeordnet ist, welches in seinem Inneren den Kanal 29 für das Kühlmittel ausbildet.

Erfindungsgemäß zeigt die Nut 27b zwei radial übereinanderliegende Leitersegmente 31, welche jeweils als Hohlleiter ausgebildet sind und somit jeweils in ihrem Inneren einen Kanal 29 zum axialen Durchfluss von Kühlmittel ausbilden.

Bei einer nicht beanspruchten Ausführungsform zeigt die Nut 27c 2 radial übereinanderliegende Leitersegmente 31, welche jeweils ein U-förmiges Querschnittsprofil aufweisen. Hierdurch sind ebenfalls zwei Kanäle 29 innerhalb der jeweiligen "U"s gebildet. Beim Beispiel der Nut 27c sind die Leitersegmente 31 hier zusätzlich mit einem Imprägniermittel versehen 35, welches den Innenraum der Nut 27c gegen den radial innen liegenden Bereich des Rotors 7 hin fluiddicht abdichtet. Dabei wird das Imprägniermittel so aufgebracht, dass es nicht die Kanäle 29 innerhalb der "U"s auffüllt.

Bei einer nicht beanspruchten Ausführungsform zeigt die Nut 27d zwei radial beabstandet angeordnete Leitersegmente 31, zwischen denen ein axialer Kanal 29 durch einen Abstandshalter freigehalten wurde, welcher nach dem Einbringen eines Imprägniermittels 35 in den radial innen liegenden Bereich der Nut entfernt wurde. Somit liegt auch hier ein Kanal 29 für den axialen Fluss von Kühlmittel vor, welcher zum Bereich des Rotors hin fluiddicht abgedichtet ist. Nach radial außen hin liegt ebenfalls eine fluiddichte Abdichtung durch das Statorblechpaket selbst vor. Diese Abdichtung kann zusätzlich durch das kapillare Einsaugen von Imprägniermittel in diese Bereiche des Statorblechpakets verstärkt werden. Auch bei den geschlossenen Kanalstrukturen wie in den Nuten 27a oder 27b, 27e, 27f kann eine entsprechende zusätzliche Auffüllung mit Imprägniermittel optional erfolgen.

Erfindungsgemäß zeigt die Nut 27e zwei Leitersegmente 31, von denen eines als massives Leitersegment und eines als Hohlleiter ausgebildet ist. Durch den Hohlleiter liegt hier also ebenfalls ein axialer Kanal 29 innerhalb der Nut vor.

Bei einer nicht beanspruchten Ausführungsform zeigt die Nut 27f zwei Leitersegmente 31, welche jeweils in den Innenraum eines zusätzlichen Rohrs 33 eingebettet sind. Auch hier liegt durch die Rohre 33 eine fluiddichte Kapselung der Kanäle 29 vor. Optional kann jedoch auch hier ein Befüllen der Nut mit einem zusätzlichen Imprägniermittel vorgesehen sein.

Die Konfigurationen der dargestellten Nuten 27b und 27e sind Teil der Erfindung. Die Konfigurationen der dargestellten Nuten 27a, 27c, 27d und 27f werden nicht beansprucht und sind nur beispielhaft zu verstehen und sollen die Variationsbreite der möglichen Ausführungsformen darstellen. Bei einem realen Stator sind aber zweckmäßig die über den Umfang verteilten Nuten entweder alle gleich ausgeführt oder es wechseln sich wenige unter einander ähnliche Konfigurationen miteinander ab. Es sind auch zahlreiche andere Ausführungsformen denkbar, beispielsweise mit mehr als zwei Leitersegmenten innerhalb einer Nut oder mit anderweitigen Querschnittsformen von Leitersegmenten 31 und/oder separaten Kühlmittelrohren 33. Wesentlich ist nur, dass zumindest in einem Teil der Nuten 27 ein Kanal 29 zum Durchfluss von Kühlmittel in axialer Richtung vorliegt, welcher insbesondere nach radial innen und außen gegen die übrigen Bereiche des Stators und gegen den Rotor fluiddicht abgedichtet ist. Das in diesen Kanälen 29 fließende Kühlmittel kann entweder in direktem thermischen Kontakt mit den Leitersegmenten 31 stehen, wie beispielsweise bei den Nuten 27b, 27c, 27d und 27e (teilweise) und 27f. Oder aber es kann in enger Nachbarschaft zu den Leitersegmenten 31 fließen und beispielsweise durch ein Imprägniermittel 35 und/oder eine zusätzliche Rohrwand thermisch an diese angekoppelt sein. In jedem Fall ist durch die Anordnung von Kanälen 29 innerhalb der Nuten 27 eine effiziente Entwärmung der Leitersegmente 31 möglich. Diese Kanäle 29 sind am Übergang des Stators 3 in seinen ersten axialen Endbereich 15 fluidisch so an die erste Kühlmittelkammer 13 gekoppelt, dass Kühlmittel von der Kühlmittelkammer 13 in die Kanäle 29 eingespeist werden kann oder umgekehrt.

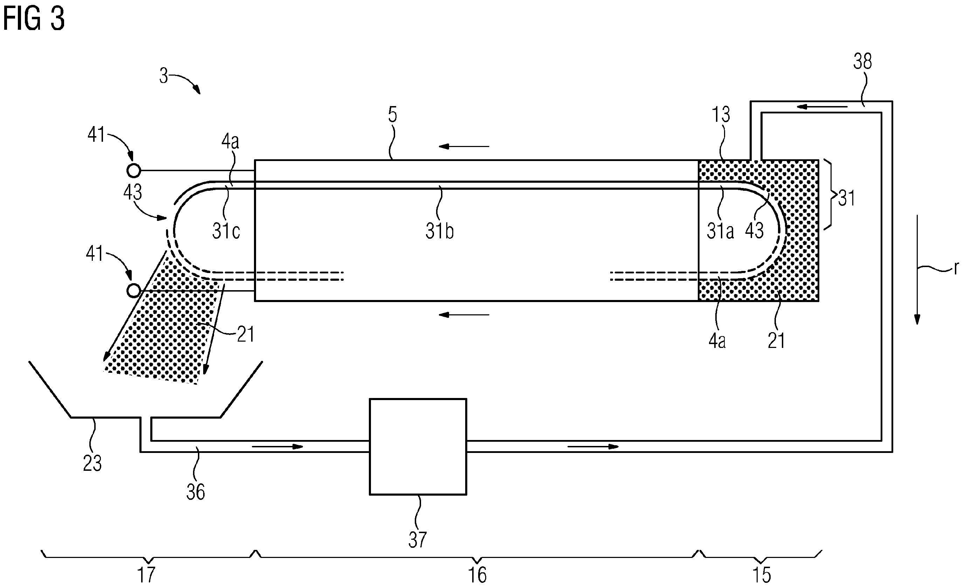

Figur 3 zeigt eine Detailansicht des unten liegenden Bereichs eines Stators 3 nach einem weiteren Beispiel der Erfindung im schematischen Längsschnitt. Gezeigt ist also ein ähnlicher Schnitt wie in Figur 1, aber es ist nur der unten liegende Bereich des Stators ohne den Rotor und ohne Gehäuse schematisch dargestellt. Gezeigt ist ein ausgewähltes Leitersegment 31, welches einen axial innenliegenden Innenabschnitt 31b aufweist, der ähnlich wie in Figur 2 gezeigt in eine hier nicht dargestellten Nut des Statorblechpakets 5 eingebettet ist. Das Leitersegment 31 ist zumindest in einem Innenabschnitt 31b als Hohlleiter ausgebildet, sodass in seinem Inneren ein Kanal zum axialen Durchfluss von Kühlmittel durch den Leiter definiert ist, ähnlich wie bei der Nut 27b der Figur 2. Ähnlich wie beim Beispiel der Figur 1 liegt auch hier im ersten axialen Endbereich 15 eine erste Kühlmittelkammer 13 vor, welche auf dieser Seite die Wickelköpfe 4a der Statorwicklung umgibt. Diese Wickelköpfe 4a sind dadurch gebildet, dass die hier liegenden axialen Außenabschnitte 31a der jeweiligen Leitersegmente 31 miteinander verbunden sind. Schematisch ist dies in Figur 3 dadurch dargestellt, dass der Außenabschnitt 31a des ausgewählten Leitersegments 31 (durchgezogen) in den entsprechenden Außenabschnitt des nächsten Leitersegment (gestrichelt dargestellt) übergeht. Entsprechendes gilt für den gegenüberliegenden zweiten axialen Endbereich 17. Da es sich um eine verteilte Statorwicklung handelt, sind die an das ausgewählte Leitersegment 31 elektrisch anschließenden Leitersegmente jedoch jeweils auf einer anderen Umfangsposition und somit in einer anderen Nut angeordnet. Die gezeigte erste Kühlmittelkammer 13 soll sich im gezeigten Beispiel ringförmig über den gesamten Umfang des Stators erstrecken. Es ist jedoch alternativ auch möglich, dass diese Kammer in einzelne Umfangssegmente unterteilt ist. Wesentlich ist nur, dass im entsprechenden axialen Endbereich mehrere Leiterverbindungen zusammen in einer gemeinsamen gekapselten Kammer angeordnet sind.

Im gezeigten Beispiel der Figur 3 entspricht erfindungsgemäß der erste axiale Endbereich 15, welcher die gekapselte Kühlmittelkammer 13 aufweist, der Kühlmittelzuflussseite des Stators 3. Hierzu ist diese Kühlmittelkammer 13 mit einer Kühlmittelzuleitung 38 des Kühlmittelkreislaufs des Stators verbunden. Weiterhin ist der Druck innerhalb der Kühlmittelkammer 13 gegenüber dem Umgebungsdruck erhöht, sodass von hier aus Kühlmittel durch die innerhalb der Nuten liegenden Kanäle 29 in Richtung des gegenüberliegenden axialen Endbereichs 17 gefördert werden kann. Um das Kühlmittel 21 aus der Kühlmittelkammer 13 in diese Kanäle einspeisen zu können, liegt in diesem Bereich wenigstens eine Öffnung 43 in dem jeweiligen Leitersegment 31 vor. Solche Öffnungen können unterschiedlich ausgestaltet sein. So kann es sich beispielsweise um eine Bohrung handeln oder um ein offen liegendes Enden eines Hohlleiters, welches elektrisch beispielsweise über einen massiven Leiter, eine Klammer, eine Lötstellen oder einer anderen Art von elektrischem Kontakt mit dem nächsten Leitersegment verbunden ist.

Im gezeigten Beispiel weist das Leitersegment 31 auch im zweiten axialen Endbereich 17 wenigstens eine Öffnung 43 auf, durch die Kühlmittel aus dem Hohlleiter austreten kann. Ähnlich wie beim Beispiel der Figur 1 ist auch hier der zweite axiale Endbereich 17 nicht gekapselt und das hier austretende Kühlmittel 21 wird in einem offenen Sammelbereich 23 gesammelt. Von hier aus wird es durch eine Kühlmittelrückleitung 36 zu einer Rückkühleinheit 37 transportiert, von wo aus es in einem geschlossenen Kreislauf wieder zur Kühlmittelzuleitung 38 gelangt und erneut in die erste Kühlmittelkammer 13 eingespeist wird. Die Richtung des Kühlmittelflusses ist in Figur 3 durchgehend mit Pfeilen markiert.

Die gesamte Statorwicklung 4 weist eine Mehrzahl von Leitersegmenten ähnlich wie das in Figur 3 dargestellte ausgewählte Leitersegment 31 auf. Dabei entspricht die Anzahl solcher Leitersegmente 31 dem Doppelten der Anzahl der Spulenwindungen, da für jede Windungsschleife zwei Leitersegmente benötigt werden. Der Stromfluss findet ringförmig über jeweils eine solche Spulenwindung statt, mit anderen Worten weist jede Spulenwicklung in Bezug auf die axiale Stromflussrichtung einen Hinleiter und einen Rückleiter auf. Im Unterschied zu dieser wechselnden Stromflussrichtung ist die Flussrichtung des Kühlmittels durch alle innerhalb des Stators 3 vorliegenden Nutkanäle 29 einheitlich. So fließt wie in Figur 3 dargestellt das Kühlmittel hier immer vom ersten axialen Endbereich 15 hin zum zweiten axialen Endbereich 17 durch die Statornuten.

In Figur 3 ist die radiale Richtung durch den Richtungspfeil r angedeutet. Im gezeigten Ausschnitt des Stators 3 zeigt dieser Richtungspfeil nach radial außen. In diesem Beispiel weist die Statorwicklung 4 zwei Wicklungslagen auf, sodass ähnlich wie in Figur 2 innerhalb jeder Nut jeweils ein inneres und ein äußeres Leitersegment parallel geführt sind. Das ausgewählte Leitersegment 31 ist im Beispiel der Figur 3 ein radial innenliegendes Leitersegment, und die daran anschließenden nur gestrichelt angedeuteten nächsten Leitersegmente sind jeweils auf der radial außenliegenden Wicklungslage angeordnet.

Beim Beispiel der Figur 3 sind erfindungsgemäß die elektrischen Anschlüsse 41 zur Kontaktierung der Statorwicklung 4 mit einem äußeren Stromkreis ausschließlich im zweiten axialen Endbereich 17, also auf der Kühlmittelaustrittsseite des Stators angeordnet. Dies bedingt den Vorteil, dass keine elektrischen Durchführungen durch die unter Druck stehende erste Kühlmittelkammer 13 geleitet werden müssen.

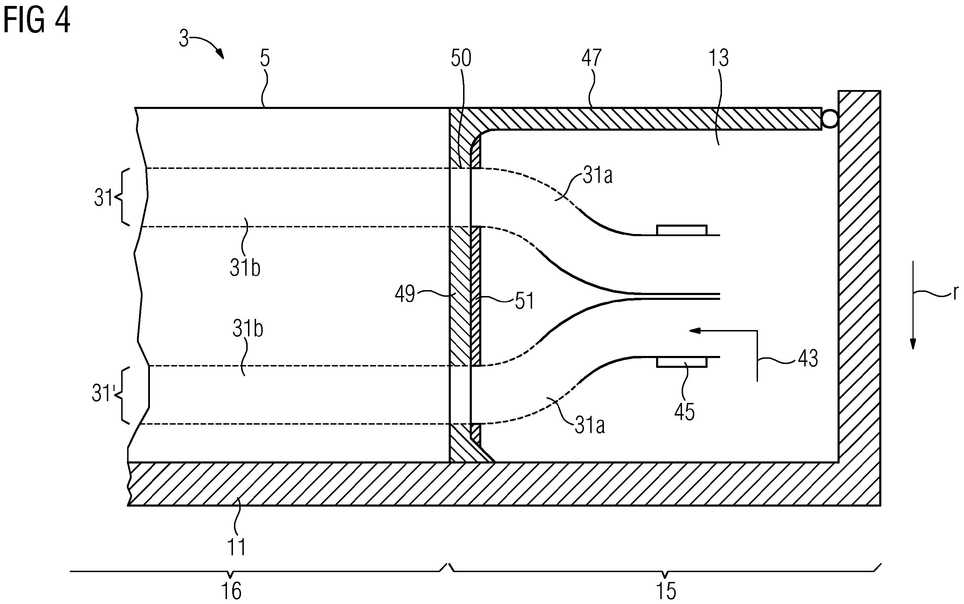

Figur 4 zeigt einen Ausschnitt aus einem Stator 3 nach einem weiteren Beispiel der Erfindung im schematischen Längsschnitt. Diese Schnittdarstellung entspricht den Schnittdarstellungen der beiden Figuren 1 und 3, und der gezeigte Ausschnitt entspricht dem Bereich, der bei den dortigen beiden Beispielen rechts unten dargestellt ist. Es handelt sich also um den ersten axialen Endabschnitt 15 und den daran angrenzenden Teil des axial innenliegenden Bereichs 16. Gezeigt ist ein Teil des Gehäuses 11, welches im innen liegenden Bereich 16 mit dem Statorblechpaket 5 verbunden ist. Figur 4 zeigt Teile von zwei ausgewählten Leitersegmenten 31 und 31', wobei jeweils ein Teil des zugehörigen Innenabschnitts 31b und der jeweils daran angrenzende Außenabschnitt 31a gezeigt sind. Die Innenabschnitte 31b sind hier nur gestrichelt dargestellt, da sie innerhalb von Nuten des Statorblechpakets 5 geführt sind und nicht genau innerhalb der gezeigten Schnittebene liegen. Die Schnittebene liegt hier in dem Umfangsbereich, welcher die elektrische Verbindung zwischen den beiden gezeigten Außenabschnitten 31a beinhaltet. Diese elektrische Verbindung ist hier durch eine elektrisch leitende Klammer 45 realisiert. Dabei wird hier eine elektrische Verbindung zwischen einem radial innenliegenden Leitersegment 31 einer innenliegenden Wicklungslage und einem radial außenliegenden Leitersegment 31` einer äußeren Wicklungslage erzeugt. Die beiden gezeigten Leitersegmente 31 und 31` sind hier erfindungsgemäß jeweils als Hohlleiter ausgebildet. Diese Hohlleiter sind im axialen Endbereich 15 offen, sodass durch diese Öffnungen 43 von hier aus Kühlmittel in das Leiterinnere eingespeist werden kann.

Die Einspeisung von Kühlmittel geschieht hier erfindungsgemäß von der ersten Kühlmittelkammer 13 aus, welche auch hier als eine die Wickelköpfe umschließende Wickelkopfkammer gebildet ist. Die Wickelköpfe werden in diesem Beispiel durch die gezeigte Verbindung der Enden der Hohlleiter gebildet. Auch hier ist eine Mehrzahl solcher Verbindungen innerhalb derselben Kühlmittelkammer angeordnet. Die Kühlmittelkammer 13 wird auf ihrer axial außen liegenden Seite durch einen Teil der Gehäusewand 11 begrenzt. Auch auf ihrer radial außen liegenden Seite (hier unten dargestellt) wird sie durch einen Teil dieser Gehäusewand 11 begrenzt, die in diesem Bereich als außenliegende Zylindermantelfläche ausgebildet ist. Auf ihrer radial innenliegenden Seite ist sie durch eine weitere zylindermantelförmige Innenwand 47 begrenzt, welche fluiddicht gegen das Gehäuse 11 abgedichtet ist. Im gezeigten Beispiel geht diese Innenwand 47 einstückig in eine ringförmige Deckplatte 49 über, welche das Statorblechpaket 5 gegen die erste Kühlmittelkammer 13 hin abdichtet, wobei die gestrichelt gezeigten Öffnungen 50 für das Einführen der Leitersegmente 31 und 31' vorgesehen sind. Mit Ausnahme dieser Öffnungen 50 ist also die Kühlmittelkammer 13 nach axial innen hin durch die Deckplatte 49 fluiddicht begrenzt. Um nach Einlegen der Leitersegmente auch den Bereich dieser Öffnungen fluiddicht abzudichten, ist hier ein zusätzliches Vergussmittel 51 aufgebracht. Zweckmäßigerweise wird der Stator beim Aufbringen dieses Vergussmittels so angeordnet, dass der erste axiale Endbereich 15 oben zu liegen kommt und sich das Vergussmittel dann entsprechend von oben (also axial außen) über die Deckplatte 49 verteilen kann. Um das Vergussmittel 51 beim Auftragen nach radial außen hin zu begrenzen, ist in diesem Beispiel zusätzlich ein Vergussrand 53 vorgesehen. Nach dem Aushärten des Vergussmittels kann der Stator 3 dann wieder mit horizontal liegender Achse, wie in Figur 4 gezeigt, ausgerichtet werden. So kann auf einfache Weise eine gekapselte Kühlmittelkammer 13 erzeugt werden, in die mittels einer hier nicht dargestellten Zuleitung Kühlmittel von außen eingespeist und unter Druck von der Kammer aus in die Öffnungen 43 der Leitersegmente 31 eingeleitet werden kann.

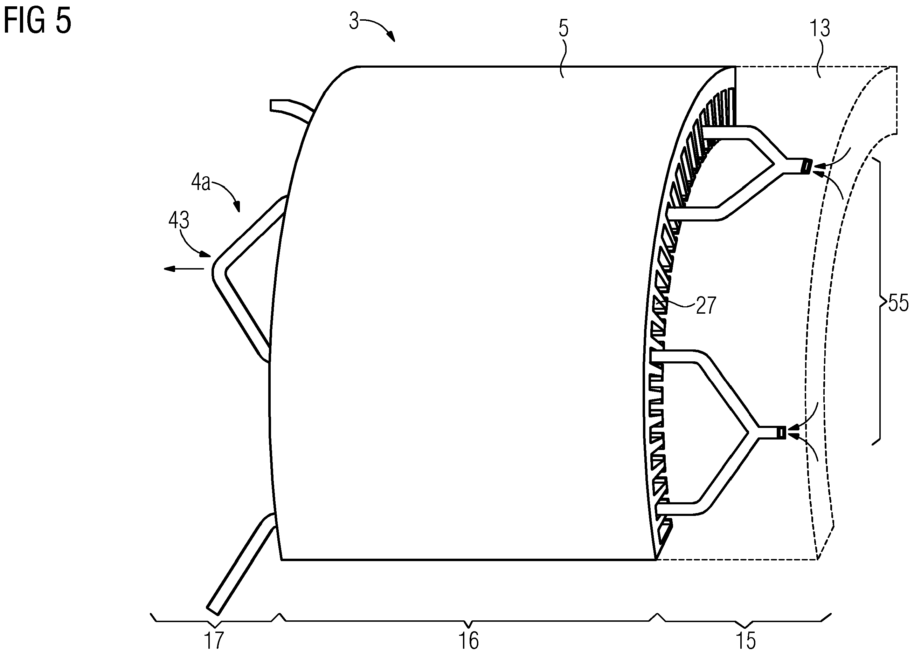

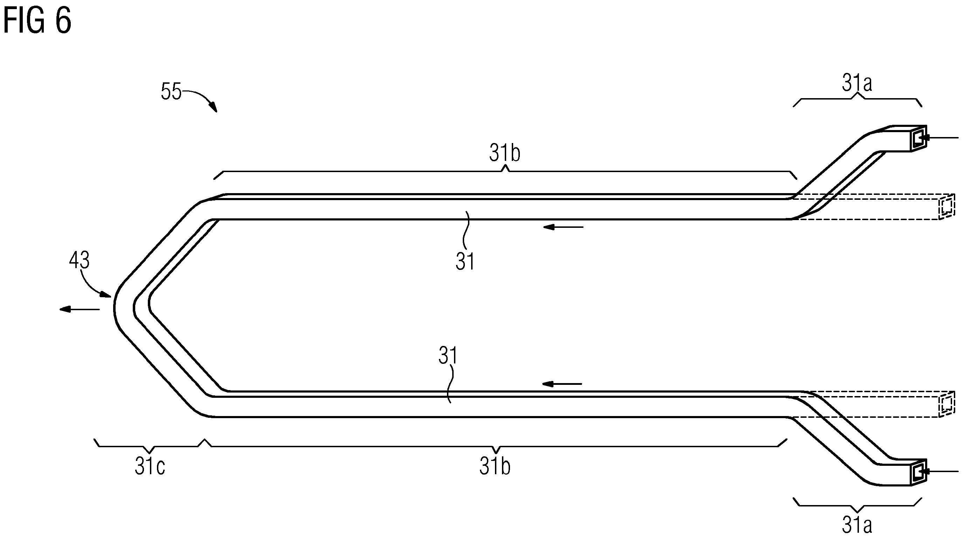

Figur 5 zeigt eine schematische Außenansicht für einen Teil eines Stators 3 nach einem weiteren Beispiel der Erfindung. Analog zu den vorhergehenden Beispielen ist auch hier eine erste Kühlmittelkammer 13 im ersten axialen Endbereich 15 des Stators angeordnet, während im zweiten axialen Endbereich 17 die Wickelköpfe 4a der Statorwicklung offen liegen. Beim Beispiel der Figur 5 sind die einzelnen Leitersegmente 31, die die Statorwicklung 4 bilden, zu vorgefertigten haarnadelförmigen Leiterelementen 55 verbunden. Der Übersichtlichkeit halber ist hier nur einzelner Strang der verteilten Statorwicklung gezeigt, welcher im gezeigten Ausschnitt ein komplettes haarnadelförmiges Leiterelement 55 sowie Teile von zwei daran angrenzenden und elektrisch damit verbundenen analog aufgebauten Leiterelementen umfasst. In Figur 6 ist zum besseren Verständnis nur das eine ausgewählte haarnadelförmige Leiterelement 55 ohne die angrenzenden Elemente und ohne das Statorblechpaket 5 gezeigt.

Hierbei weist ein jeweiliges haarnadelförmiges Leiterelement 55 zwei axial innenliegende Innenabschnitte 31b und einen U-förmig gebogenen axial außenliegenden Abschnitt 31c auf, welcher diese beiden Innenabschnitte 31b miteinander verbindet. Dieser U-förmig gebogene Abschnitt 31c ist im zweiten axialen Endbereich 17 des Stators angeordnet und somit nicht von einer Wickelkopfkammer oder Kühlmittelkammer umgeben. Die gegenüberliegenden offenen Bereiche der Haarnadel enden dagegen innerhalb der ersten Kühlmittelkammer 13. Die beschriebenen haarnadelförmigen Leiterelemente 55 sind jeweils als Hohlleiter ausgebildet, wobei die Hohlleiter am offenen Ende der Haarnadel offen sind, so das Kühlmittel von der ersten Kühlmittelkammer aus hier eingespeist werden kann. Im U-förmig gebogenen Abschnitt sind die haarnadelförmigen Leiterelemente 55 ebenfalls jeweils mit wenigstens einer Öffnung 43 versehen, die hier als zusätzliche Bohrung ausgebildet ist. Durch diese Öffnungen 43 kann das Kühlmittel im zweiten axialen Endbereich 17 wieder austreten. Auch hier liegt also eine einheitliche axiale Kühlmittelflussrichtung 57 vor, die für alle Leitersegmente gleich ist und die unabhängig von der Stromflussrichtung in den einzelnen Leitersegmenten ist. Die beschriebene haarnadelförmige Ausführung der Leiter erleichtert die Fertigung der Wicklung, denn es kann eine Vielzahl gleichartiger vorgefertigter Teile verwendet werden.

Die Form ist bevorzugt so gewählt, dass durch die Öffnung der Haarnadel ein vorgegebener Abstand zweier elektrisch zu verbindender Nuten überwunden werden kann. Zweckmäßig kann die Haarnadel auch so geformt sein, dass beispielsweise einer seiner geraden Innenabschnitte 31b auf einer innenliegenden Wicklungslage und der andere auf einer äußeren Wicklungslage angeordnet werden kann. Die vollständige Statorwicklung wird dann durch Ineinanderschachteln vieler solcher Haarnadeln und durch ein elektrisches Verbinden innerhalb der einzelnen elektrischen Stränge erzeugt.

Das einzelne haarnadelförmige Leiterelement 55 der Figur 6 weist an seinem rechten, offenen Ende zwei auseinandergebogene Außenabschnitte 31a auf. Um das haarnadelförmige Leiterelement 55 durch die Nuten 27 des Statorblechpakets 5 axial hindurch schieben zu können ist es jedoch zweckmäßig, dass das vorgefertigte haarnadelförmige Bauteil an diesem Ende zunächst gerade Außenabschnitte 31a aufweist, wie in Figur 6 durch gestrichelte Linien angedeutet. Nach dem Hindurchschieben der Leiterelemente durch die Nuten können diese Außenabschnitte 31a dann anschließend in die in Figur 5 gezeigte Form gebogen werden, so dass eine elektrische Verbindung mit den innerhalb eines Strangs benachbarten Leiterelementen ermöglicht wird. Eine solche Verbindung kann wiederum ähnlich wie in Figur 4 gezeigt so erfolgen, dass die Enden der Hohlleiter offen bleiben, so das Kühlmittel auf dieser Seite in die Hohlleiter eingespeist werden kann.

Dadurch, dass der fertige Stator eine Vielzahl von Leitersträngen aufweist (und nicht nur einen wie in Figur 5 gezeigt), kann aus der Kühlmittelkammer 13 Kühlmittel gleichzeitig in eine Vielzahl solcher Leitersegmente eingespeist werden.

Bei einer nicht beanspruchten Ausführungsform ist es bei der haarnadelförmigen Ausführung des Hohlleiters wie in Figur 5 auch möglich, dass keine erste Kühlmittelkammer 13 in Form einer gemeinsamen Wickelkopfkammer zur Einspeisung von Kühlmittel vorliegt, sondern dass alternativ die einzelnen Verbindungsbereiche der zu verbindenden Leiterelemente 55 jeweils mit einem separaten Schlauchanschluss versehen sind. Der apparative Aufwand zur Bildung der einzelnen Schlauchanschlüsse ist hier zwar unter Umständen etwas höher, es ist jedoch auch mit dieser alternativen Variante möglich, Kühlmittel mit einer gemeinsamen axialen Transportrichtung durch die Kanäle der parallel laufenden Nuten zu leiten.

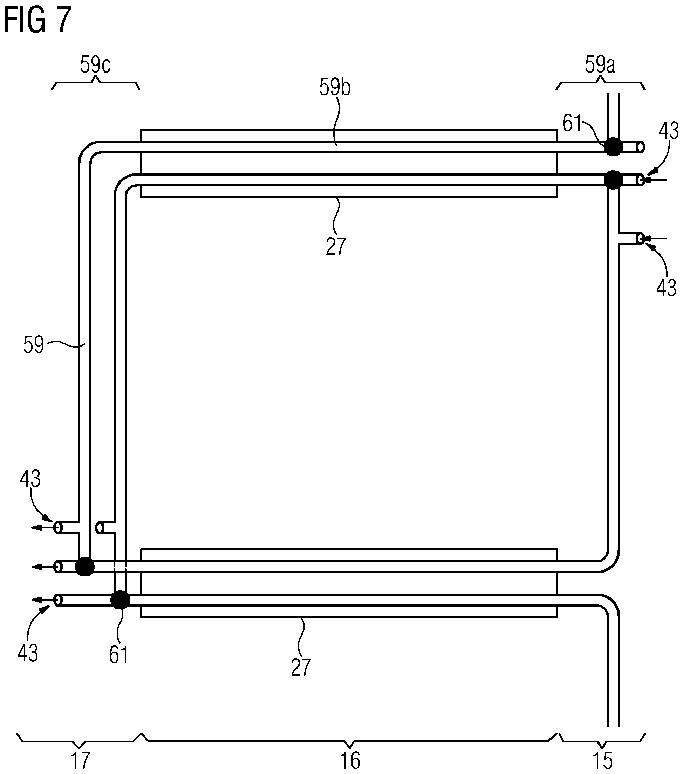

Figur 7 zeigt einen alternativen Aufbau mehrerer vorgefertigter Leiterelemente, welche alternativ zu den haarnadelförmigen Leiterelementen der Figur 5 und 6 in einem Stator gemäß der Erfindung zum Einsatz kommen können. Beim Beispiel der Figur 7 wird der übergeordnete Wicklungsstrang durch elektrisches Verbinden mehrerer vorgefertigter L-förmiger Leiterelemente 59 erzeugt. Jedes dieser Leiterelemente weist einen langen und einen kurzen Schenkel auf, wobei der kurze Schenkel jeweils einen Außenabschnitt 59a oder 59c bildet und der lange Schenkel einen Innenabschnitt 59b des zugehörigen Leitersegments und den gegenüberliegenden Außenabschnitt 59c oder 59a bildet. Die Anzahl der insgesamt vorliegenden Leitersegmente entspricht also hier der Anzahl der L-förmigen Leiterelemente und somit dem Doppelten der Windungszahl. Im gezeigten Beispiel werden L-förmige Hohlleiter verwendet, wobei im Bereich der elektrischen Verbindungsstellen 61 keine Verbindung der Leiterinnenräume geschaffen werden muss. Dies ist wie beim vorherigen Beispiel deshalb möglich, weil ein gemeinsames Einspeisen von Kühlmittel in die Hohlleiter aus der gemeinsamen Kühlmittelkammer möglich ist, die zumindest auf einer Seite die axialen Enden der Leitersegmente gemeinsam umschließt. Die Einspeisung von Kühlmittel im ersten axialen Endbereich 15 sowie das Ausleiten von Kühlmittel im gegenüberliegenden zweiten axialen Endbereich 17 geschieht wiederum durch Öffnungen 43 in den Hohlleitern, die entweder durch die offenen Leiterenden und/oder durch zusätzliche Bohrungen gebildet sein können. Im axial innenliegenden Bereich 16 sind die Innenabschnitte 59b wiederum in Nuten 27 des Statorblechpakets angeordnet. Im gezeigten Beispiel sind jeweils zwei solche Innenabschnitte 59b gemeinsam in einer Nut angeordnet.

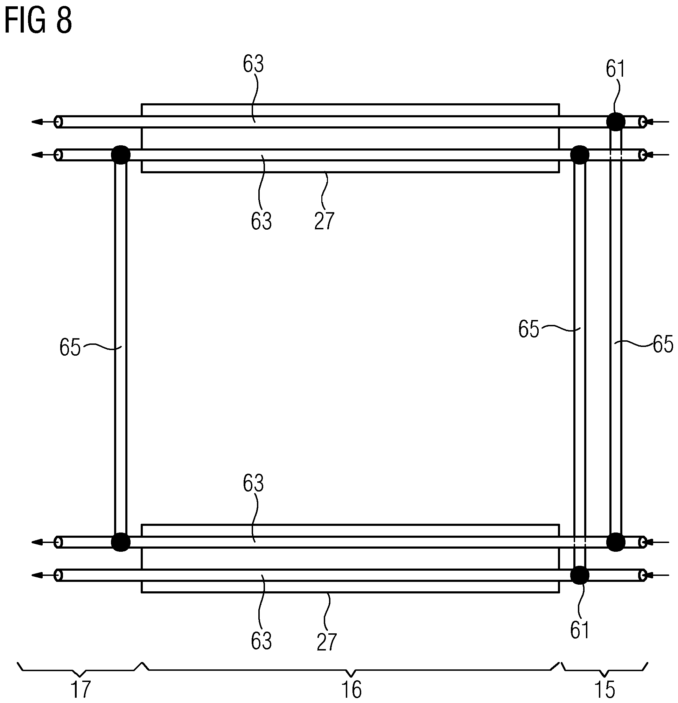

Figur 8 zeigt einen weiteren alternativen Aufbau mehrerer vorgefertigter Leiterelemente 63, wie sie ebenfalls in einem Stator gemäß der vorliegenden Erfindung zum Einsatz kommen können. Im Unterschied zu den beiden vorherigen Beispielen liegen hier stabförmige Hohlleiter 63 vor, welche in ihren axialen Endbereichen elektrisch durch massive Stableiter verbunden sind. Die übrige Anordnung der Leiterelemente, insbesondere die Einbettung in den Nuten 27 sowie der Durchfluss von Kühlmittel sind analog zu den vorherigen Beispielen. Auch bei diesem Beispiel findet zumindest in einem axialen Endbereich eine Einspeisung von Kühlmittel in die offen liegenden Enden der Hohlleiter 63 aus der diese gemeinsam umschließenden Kühlmittelkammer 13 statt.

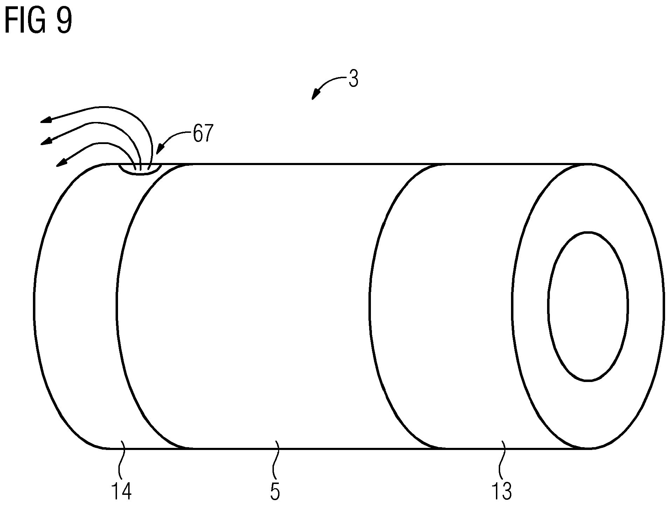

Figur 9 zeigt eine schematische perspektivische Ansicht eines Stators 3 nach einem weiteren Ausführungsbeispiel der Erfindung. Bezüglich der Anordnung der Leitersegmente innerhalb der Nuten des Statorblechpakets kann dieser Stator ähnlich aufgebaut sein wie bei den vorhergehenden Beispielen. Auch die gezeigte erste Kühlmittelkammer 13 im ersten axialen Endbereich 15 des Stators kann ähnlich ausgestaltet sein wie vorab beschriebenen. So ist auch hier diese Seite des Status als Kühlmitteleintrittsseite ausgebildet, und das Kühlmittel wird unter Druck von der ersten Kühlmittelkammer 13 aus in die Kanäle innerhalb der Nuten eingespeist und so axial in Richtung des zweiten axialen Endbereichs 17 transportiert, wobei die eingebettete Statorwicklung gekühlt wird. Im Unterschied zu den bisherigen Beispielen liegt hier jedoch eine zweite gekapselte Kühlmittelkammer 14 im zweiten axialen Endbereich 17 vor, welche hier das aus den Kanälen der Nuten austretende Kühlmittel auffängt und über eine Austrittsöffnung 67 dem Kühlmittelkreislauf zurückführen kann. Diese gekapselte Ausführung der Austrittsseite kann vorteilhaft sein, beispielsweise um das Kühlmittel auf der Austrittsseite gegen die Schwerkraft zu fördern und dabei einen Verlust von Kühlmittel zum Rotor hin zu vermeiden. So kann die Austrittsöffnung 67 hier wie in der Figur 9 dargestellt an einem oben liegenden Ende des Stators angeordnet sein. Durch den gegenüber der Umgebung erhöhten Druck des Kühlmittels in der zweiten Kühlmittelkammer 14 ist es möglich, das Kühlmittel hier entgegen der Schwerkraft zu fördern. Auch abgesehen von der genauen Positionierung der Austrittsöffnung kann es allgemein vorteilhaft sein, die Austrittsseite wie gezeigt zu kapseln, beispielsweise um eine definierte Druckdifferenz über die Kanäle in den Statornuten einstellen zu können.

## Patentansprüche

1. Stator (3) für eine elektrische Maschine (1) mit einer zentralen Achse (A), umfassend
- eine Statorwicklung (4),
- ein Statorjoch (5) mit einer Mehrzahl von Nuten,
- wobei die Statorwicklung (4) eine Mehrzahl von miteinander verbundenen Leitersegmenten (31,31') aufweist mit jeweils einem axial innenliegenden Innenabschnitt (31b) und zwei axial außenliegenden Außenabschnitten (31a,31c),
- wobei die Innenabschnitte (31b) in die Nuten (27) des Statorjochs (5) eingebettet sind,
- wobei zumindest in einem Teil der Nuten (27) Kanäle (29) zum Durchfluss von Kühlmittel (21) in axialer Richtung gebildet sind,
- wobei der Stator (3) zumindest in einem ersten axialen Endbereich (15) eine gegen ihre Umgebung fluidisch gekapselte erste Kühlmittelkammer (13) aufweist, welche zumindest
einen Teil der in diesem ersten axialen Endbereich (15) liegenden Außenabschnitte (31a) der Leitersegmente (31) umgibt,
- wobei die erste Kühlmittelkammer (13) fluidisch mit den Kanälen (29) der Nuten (27) verbunden ist, um Kühlmittel (21) in diese Kanäle (29) einzuleiten und/oder aus diesen auszuleiten,
- wobei das Statorjoch (5) im ersten axialen Endbereich (15) mit einer Deckplatte (49) verbunden ist,
- wobei die erste Kühlmittelkammer (13) gegen diese Deckplatte (49) fluiddicht abgedichtet ist, so dass das Kühlmittel (21) durch einen Überdruck aus der wenigstens einen ersten Kühlmittelkammer (13) im ersten axialen Endbereich (15) eingespeist wird,
- und wobei die Deckplatte (49) eine Mehrzahl von Öffnungen (50) aufweist, die die erste Kühlmittelkammer (13) fluidisch mit den Kanälen (29) der Nuten (27) koppeln,
- und wobei zumindest für eine erste Teilmenge der Leitersegmente (31) die Innenabschnitte (31b) der Leitersegmente (31) als Hohlleiter ausgebildet sind, so dass die Kanäle (29) der Nuten (27) durch die Innenräume der Leiter gebildet werden,
- und wobei die erste Kühlmittelkammer (13) im ersten axialen Endbereich (15) zur Einspeisung von Kühlmittel (21) in die Kanäle (29) der Nuten (27) ausgebildet ist,
- und wobei der gegenüberliegende zweite axiale Endbereich (17) als Kühlmittelaustrittsseite der Kanäle (29) ausgebildet ist,
und wobei die Statorwicklung (4) über elektrische Anschlüsse (41) mit einem äußeren Stromkreis verbindbar ist, wobei diese elektrischen Anschlüsse (41) ausschließlich im zweiten axialen Endbereich (17) der Statorwicklung angeordnet sind, welcher dem ersten axialen Endbereich (15) gegenüberliegt.

2. Stator (3) nach Anspruch 1,
welcher in einem zweiten axialen Endbereich (17), der dem ersten axialen Endbereich (15) gegenüberliegt, eine gegen ihre Umgebung fluidisch gekapselte zweite Kühlmittelkammer (14) aufweist, welche zumindest einen Teil der in diesem zweiten axialen Endbereich (17) liegenden Außenabschnitte (31c) der Leitersegmente (31) umgibt.

3. Stator (3) nach einem der vorhergehenden Ansprüche, bei welchem die Statorwicklung (4) im Bereich der Innenabschnitte (31b) mit einem Imprägniermittel (35) versehen ist, welches die Kanäle (29) der Nuten (27) fluidisch gegen die äußere Umgebung abdichtet.

4. Stator (3) nach einem der vorhergehenden Ansprüche, bei welchem die Statorwicklung (4) durch elektrisches Verbinden einer Vielzahl vorgefertigter haarnadelförmiger Leiterelemente (55) gebildet ist,
wobei jedes dieser haarnadelförmigen Leiterelemente (55) zwei Innenabschnitte (31b) aufweist.

5. Stator (3) nach einem der Ansprüche 1 bis 3, bei welchem die Statorwicklung (4) durch elektrisches Verbinden einer Vielzahl vorgefertigter stangenförmiger und/oder L-förmiger Leiterelemente (59,63) gebildet ist.

6. Stator (3) nach einem der vorhergehenden Ansprüche, bei welchem für eine zweite Teilmenge der Leitersegmente (31) die Innenabschnitte (31b) als massive Leiter ausgebildet sind.

7. Stator (3) nach Anspruch 6, bei welchem die als Hohlleiter ausgeführten Abschnitte der Leitersegmente (31,63) durch massiv ausgeführte Leiterabschnitte (65) elektrisch miteinander verbunden sind.

8. Stator (3) nach einem der Ansprüche 6 oder 7,
bei welchem zumindest ein Teil der Außenabschnitte (31a,31c) der Leitersegmente als Hohlleiter ausgeführt ist,
wobei diese Hohlleiter im Bereich der Außenabschnitte (31a, 31c) Öffnungen (43) aufweisen, um Kühlmittel (21) in den Hohlleiter einzuspeisen und/oder aus dem Hohlleiter auszuleiten.

9. Elektrische Maschine (1) mit einem Stator (3) nach einem der vorhergehenden Ansprüche und einem Rotor (7).

10. Elektrische Maschine (1) nach Anspruch 9, welche frei von einem Spaltrohr ist.

## Claims

1. Stator (3) for an electrical machine (1) with a central axis (A), comprising
- a stator winding (4),
- a stator yoke (5) with a plurality of slots,
- wherein the stator winding (4) has a plurality of conductor segments (31, 31') which are connected to one another and each have one axially internal inner section (31b) and two axially external outer sections (31a, 31c),
- wherein the inner sections (31b) are embedded into the slots (27) of the stator yoke (5),
- wherein ducts (29) for coolant (21) to flow through in the axial direction are formed at least in a portion of the slots (27),
- wherein the stator (3) has, at least in a first axial end region (15), a first coolant chamber (13) which is fluidically encapsulated in relation to the area surrounding it and which surrounds at least
a portion of the outer sections (31a) of the conductor segments (31), which outer sections are situated in this first axial end region (15),
- wherein the first coolant chamber (13) is fluidically connected to the ducts (29) of the slots (27) in order to conduct coolant (21) into these ducts (29) and/or out of said ducts,
- wherein the stator yoke (5) is connected, in the first axial end region (15), to a covering plate (49),
- wherein the first coolant chamber (13) is sealed off in a fluid-tight manner in relation to this covering plate (49), so that the coolant (21) is fed from the at least one first coolant chamber (13) in the first axial end region (15) owing to an overpressure,
- and wherein the covering plate (49) has a plurality of openings (50) which fluidically couple the first coolant chamber (13) to the ducts (29) of the slots (27),
- and wherein, at least for a first subset of the conductor segments (31), the inner sections (31b) of the conductor segments (31) are designed as hollow conductors, so that the ducts (29) of the slots (27) are formed by the interiors of the conductors,
- and wherein the first coolant chamber (13) is designed, in the first axial end region (15), for feeding coolant (21) into the ducts (29) of the slots (27),
- and wherein the opposite second axial end region (17) is designed as a coolant outlet side of the ducts (29),
and wherein the stator winding (4) can be connected to an outer electrical circuit by means of electrical connections (41), wherein these electrical connections (41) are arranged exclusively in the second axial end region (17) of the stator winding which is opposite the first axial end region (15).

2. Stator (3) according to Claim 1,
which has, in a second axial end region (17) which is opposite the first axial end region (15), a second coolant chamber (14) which is fluidically encapsulated in relation to the area surrounding it and which surrounds at least a portion of the outer sections (31c) of the conductor segments (31), which outer sections are situated in this second axial end region (17).

3. Stator (3) according to either of the preceding claims, in which the stator winding (4) is provided, in the region of the inner sections (31b), with an impregnating agent (35) which fluidically seals off the ducts (29) of the slots (27) in relation to the outer surrounding area.

4. Stator (3) according to one of the preceding claims, in which the stator winding (4) is formed by electrically connecting a large number of prefabricated hairpin-shaped conductor elements (55),
wherein each of these hairpin-shaped conductor elements (55) has two inner sections (31b).

5. Stator (3) according to one of Claims 1 to 3, in which the stator winding (4) is formed by electrically connecting a large number of prefabricated rod-shaped and/or L-shaped conductor elements (59, 63).

6. Stator (3) according to one of the preceding claims, in which, for a second subset of the conductor segments (31), the inner sections (31b) are designed as solid conductors.

7. Stator (3) according to Claim 6, in which those sections of the conductor segments (31, 63) which are embodied as hollow conductors are electrically connected to one another by conductor sections (65) which are embodied in solid form.

8. Stator (3) according to either of Claims 6 and 7, in which at least a portion of the outer sections (31a, 31c) of the conductor segments is embodied as a hollow conductor,
wherein these hollow conductors have, in the region of the outer sections (31a, 31c), openings (43) in order to feed coolant (21) into the hollow conductor and/or conduct coolant out of the hollow conductor.

9. Electrical machine (1) comprising a stator (3) according to one of the preceding claims and a rotor (7).

10. Electrical machine (1) according to Claim 9 which is can-free.

## Revendications

1. Stator (3) d'une machine (1) électrique ayant un axe (A) central, comprenant
- un enroulement (4) statorique,
- une culasse (5) statorique ayant une pluralité d'encoches,
- dans lequel l'enroulement (4) statorique a une pluralité de segments (31, 31') conducteurs reliés entre eux, ayant chacun un tronçon (31b) intérieur se trouvant à l'intérieur axialement et deux tronçons (31a, 31c) extérieurs se trouvant à l'extérieur axialement,
- dans lequel les tronçons (31b) intérieurs sont incorporés dans les encoches (27) de la culasse (5) statorique,
- dans lequel au moins dans une partie des encoches (27) sont formés des canaux (29) pour le passage de réfrigérant (21) dans la direction axiale,
- dans lequel le stator (3) a, au moins dans une première partie (15) d'extrémité axiale, une première chambre (13) de réfrigérant cuirassée fluidiquement par rapport à son environnement, qui entoure au moins une partie des tronçons (31a) extérieurs, se trouvant dans cette première partie (15) d'extrémité axiale, des segments (31) conducteurs,
- dans lequel la première chambre (13) de réfrigérant communique fluidiquement avec les canaux (29) des encoches (27), afin d'introduire du réfrigérant (21) dans ces canaux (29) et/ou d'en faire sortir du réfrigérant,
- dans lequel la culasse (5) statorique est, dans la première partie (15) d'extrémité axiale, assemblée à une plaque (49) de recouvrement,
- dans lequel la première chambre (13) de réfrigérant est rendue étanche d'une manière étanche au fluide par rapport à cette plaque (49) de recouvrement, de manière à ce que le réfrigérant (21) soit injecté par une surpression de la au moins une première chambre (13) de réfrigérant dans la première partie (15) d'extrémité axiale,
- et dans lequel la plaque (49) de recouvrement a une pluralité d'ouvertures (50), qui mettent la première chambre (13) de réfrigérant en communication fluidiquement avec des canaux (29) des encoches (27),
- et dans lequel au moins pour un premier ensemble partiel des segments (31) conducteurs, les tronçons (31b) intérieurs des segments (31) conducteurs sont constitués sous la forme de conducteurs tubulaires de manière à former les canaux (29) des encoches (27) par les espaces intérieurs des conducteurs,
- et dans lequel la première chambre (13) de réfrigérant est constituée dans la première partie (15) d'extrémité axiale pour l'injection de réfrigérant (21) dans les canaux (29) des encoches (27),
- et dans lequel la deuxième partie (17) d'extrémité axiale opposée est constituée sous la forme d'un côté, de sortie du réfrigérant, des canaux (29),
et dans lequel l'enroulement (4) statorique peut être connecté par des bornes (41) électriques à un circuit extérieur, dans lequel ces bornes (41) électriques sont disposées exclusivement dans la deuxième partie (17) d'extrémité axiale de l'enroulement statorique, qui est opposée à la première partie (15) d'extrémité axiale.

2. Stator (3) suivant la revendication 1,
qui a dans une deuxième partie (17) d'extrémité axiale, qui est opposée à la première partie (15) d'extrémité axiale, une deuxième chambre (14) de réfrigérant cuirassée fluidiquement par rapport à son environnement, qui entoure au moins une partie des tronçons (31c) extérieurs, se trouvant dans cette deuxième partie (17) d'extrémité axiale, des segments (31) conducteurs.

3. Stator (3) suivant l'une des revendications précédentes, dans lequel l'enroulement (4) statorique est pourvu dans la partie des tronçons (31b) intérieurs d'un agent (35) d'imprégnation, qui rend étanche fluidiquement les canaux (29) des encoches (27) par rapport à l'environnement extérieur.

4. Stator (3) suivant l'une des revendications précédentes, dans lequel l'enroulement (4) statorique est formé par une connexion électrique d'une pluralité d'éléments (55) conducteurs préfabriqués en forme d'épingle à cheveux,
dans lequel chaque élément (55) conducteur en forme d'épingle à cheveux a deux tronçons (31b) intérieurs.

5. Stator (3) suivant l'une des revendications 1 à 3, dans lequel l'enroulement (4) statorique est formé par connexion électrique d'une pluralité d'éléments (59, 63) conducteurs préfabriqués en forme de tige et/ou en forme de L.

6. Stator (3) suivant l'une des revendications précédentes, dans lequel, pour un deuxième ensemble partiel des segments (31) conducteurs, les tronçons (31b) intérieurs sont constitués sous la forme de conducteurs pleins.

7. Stator (3) suivant la revendication 6, dans lequel les tronçons, réalisés en conducteurs tubulaires, des segments (31, 63) conducteurs sont connectés entre eux électriquement par des tronçons (65) conducteurs pleins.

8. Stator (3) suivant l'une des revendications 6 ou 7, dans lequel au moins une partie des tronçons (31a, 31c) extérieurs des segments conducteurs est réalisée en conducteurs tubulaires, dans lequel ces conducteurs tubulaires ont, dans la partie des tronçons (31a, 31c) extérieurs, des ouvertures (43) afin d'injecter du réfrigérant (21) dans le conducteur tubulaire et/ou d'en faire sortir du conducteur tubulaire.

9. Machine (1) électrique comprenant un stator (3) suivant l'une des revendications précédentes et un rotor (7).

10. Machine (1) électrique suivant la revendication 9, qui n'a pas de gaine.
